# EUROPEAN PATENT APPLICATION

(11) **EP 4 432 722 A1**
(43) Date of publication of application: **18.09.2024**
(21) Application number: 22914508.1
(22) Date of filing: 23.12.2022
(51) Int. Cl.: H04W 24/04, H04B 1/40

(54) **COMMUNICATION METHOD AND APPARATUS**

(30) Priority: 30.12.2021 CN 202111657575
(71) Applicant: Huawei Technologies Co., Ltd., Shenzhen, Guangdong 518129 (CN)
(72) Inventor: QU, Weiren, Shenzhen, Guangdong 518129 (CN); YAO, Jianbin, Shenzhen, Guangdong 518129 (CN)
(74) Representative: Goddar, Heinz J.
(86) International application number: PCT/CN2022/141228
(87) International publication number: WO 2023/125254

(57) **Abstract**

The present disclosure provides a communication method and apparatus, to improve link recovery efficiency. The method includes: obtaining first information from a baseband unit BBU, where the first information indicates N1 antenna line devices, the antenna line device is configured to control an antenna, and N1 is a positive integer; and maintaining a connection between a radio frequency device and a first antenna line device, where the first antenna line device is included in the N1 antenna line devices.

## Description

This application claims priority to Chinese Patent Application No. 202111657575.7, filed with the China National Intellectual Property Administration on December 30, 2021 and entitled "COMMUNICATION METHOD AND APPARATUS", which is incorporated herein by reference in its entirety.

### TECHNICAL FIELD

The present disclosure relates to the field of communication technologies, and in particular, to a communication method and apparatus.

### BACKGROUND

In a communication network, a baseband unit (baseband unit, BBU) may control an antenna line device through a remote radio unit (remote radio unit, RRU), and perform processing, such as amplifying a radio frequency signal or adjusting a downtilt of an antenna system, on the antenna system. How to use the BBU to achieve efficient control of the RRU is a technical problem worth studying.

### SUMMARY

The present disclosure provides a communication method and apparatus, to improve link recovery efficiency.

According to a first aspect, the present disclosure provides a communication method, and the method may be applied to a radio frequency device. The method includes: obtaining first information from a baseband unit BBU, where the first information indicates N1 antenna line devices, the antenna line device is configured to control an antenna, and N1 is a positive integer; and maintaining a connection between a radio frequency device and a first antenna line device, where the first antenna line device is included in the N1 antenna line devices.

In an antenna line device currently connected to the radio frequency device, a connection to the first antenna line device indicated by the BBU is maintained. A process of reestablishing a link is avoided, so that link recovery efficiency can be improved, and the BBU directly restores a management capability for the first antenna line device.

In a possible design, second information is sent to the BBU, where the second information indicates N2 antenna line devices currently connected to the radio frequency device, and N2 is a positive integer. According to such a design, the BBU may know the antenna line devices currently connected to the radio frequency device. This helps the BBU quickly restore a management capability for the antenna line devices.

In a possible design, the N1 antenna line devices include at least one antenna line device in the antenna line devices currently connected to the radio frequency device.

In a possible design, the method further includes: scanning a second antenna line device based on the first information, where the second antenna line device is included in the N1 antenna line devices, and the second antenna line device is not connected to the radio frequency device; and establishing a connection between the radio frequency device and the second antenna line device. According to such a design, the radio frequency device does not need to scan all the N1 antenna line devices indicated by the BBU. This can reduce a quantity of antenna line devices scanned by the radio frequency device, and improve link recovery efficiency.

In a possible design, the N1 antenna line devices are included in the N2 antenna line devices. The method further includes: obtaining third information from the BBU, where the third information indicates a second antenna line device, and the second antenna line device is not connected to the radio frequency device; scanning the second antenna line device based on the third information; and establishing a connection between the radio frequency device and the second antenna line device. According to such a design, the radio frequency device scans only the second antenna line device indicated by the BBU, and does not need to scan all the N1 antenna line devices indicated by the BBU. This can reduce a quantity of antenna line devices scanned by the radio frequency device, and improve link recovery efficiency.

In a possible design, the method further includes: disconnecting the radio frequency device from a third antenna line device, where the third antenna line device is included in the antenna line devices currently connected to the radio frequency device, and the third antenna line device is not included in the N1 antenna line devices. According to such a design, it is avoided that the third antenna line device cannot respond to scanning of another radio frequency device that needs to be connected to the third antenna line device, and normal establishment of another communication link can be ensured.

According to a second aspect, the present disclosure provides a communication method, and the method may be applied to a BBU. The method includes: determining N1 antenna line devices, where the antenna line device is configured to control an antenna, and N1 is a positive integer; and sending first information, where the first information indicates the N1 antenna line devices, the first information indicates a radio frequency device to maintain a connection to a first antenna line device, and the first antenna line device is included in the N1 antenna line devices.

In a possible design, the method further includes: obtaining second information, where the second information indicates N2 antenna line devices currently connected to the radio frequency device, and N2 is a positive integer.

In a possible design, the N1 antenna line devices include at least one antenna line device in the antenna line devices currently connected to the radio frequency device.

In a possible design, the N1 antenna line devices include a second antenna line device, and the second antenna line device is not connected to the radio frequency device. The first information further indicates the radio frequency device to establish a connection to the second antenna line device.

In a possible design, the N1 antenna line devices are included in the N2 antenna line devices. The method further includes: sending third information, where the third information indicates a second antenna line device, and the second antenna line device is not connected to the radio frequency device.

In a possible design, the method further includes: sending fourth information, where the fourth information indicates the radio frequency device to disconnect from a third antenna line device, where a third device is included in the antenna line devices currently connected to the radio frequency device, and the third device is not included in the N1 antenna line devices.

According to a third aspect, the present disclosure provides a communication apparatus. The communication apparatus may be a radio frequency device, an apparatus in the radio frequency device, or an apparatus that can be used with the radio frequency device. In a design, the communication apparatus may include modules that are in a one-to-one correspondence with the method/operations/steps/actions described in the first aspect. The modules may be implemented as a hardware circuit, software, or a combination of a hardware circuit and software. In a design, the communication apparatus may include a processing module and a communication module.

For example, the communication module is configured to obtain first information from a baseband unit BBU, where the first information indicates N1 antenna line devices, the antenna line device is configured to control an antenna, and N1 is a positive integer; and the processing module is configured to maintain a connection between a radio frequency device and a first antenna line device, where the first antenna line device is included in the N1 antenna line devices.

In a possible design, the communication model is further configured to send second information to the BBU, where the second information indicates N2 antenna line devices currently connected to the radio frequency device, and N2 is a positive integer.

In a possible design, the N1 antenna line devices include at least one antenna line device in the antenna line devices currently connected to the radio frequency device.

In a possible design, the processing module is further configured to: scan a second antenna line device based on the first information, where the second antenna line device is included in the N1 antenna line devices, and the second antenna line device is not connected to the radio frequency device; and establish a connection between the radio frequency device and the second antenna line device through the communication module.

In a possible design, the N1 antenna line devices are included in the N2 antenna line devices. The communication module is further configured to obtain third information from the BBU, where the third information indicates a second antenna line device, and the second antenna line device is not connected to the radio frequency device. The processing module is further configured to: scan the second antenna line device based on the third information; and establish a connection between the radio frequency device and the second antenna line device through the communication module.

In a possible design, the processing module is further configured to disconnect the radio frequency device from a third antenna line device, where the third antenna line device is included in the antenna line devices currently connected to the radio frequency device, and the third antenna line device is not included in the N1 antenna line devices.

According to a fourth aspect, the present disclosure provides a communication apparatus. The communication apparatus may be a BBU, an apparatus in the BBU, or an apparatus that can be used with the BBU. In a design, the communication apparatus may include modules that are in a one-to-one correspondence with the method/operations/steps/actions described in the second aspect. The modules may be implemented as a hardware circuit, software, or a combination of a hardware circuit and software. In a design, the communication apparatus may include a processing module and a communication module.

For example, the processing module is configured to determine N1 antenna line devices, where the antenna line device is configured to control an antenna, and N1 is a positive integer; and the communication module is configured to send first information, where the first information indicates the N1 antenna line devices, the first information indicates a radio frequency device to maintain a connection to a first antenna line device, and the first antenna line device is included in the N1 antenna line devices.

In a possible design, the communication module is further configured to obtain second information, where the second information indicates N2 antenna line devices currently connected to the radio frequency device, and N2 is a positive integer.

In a possible design, the N1 antenna line devices include at least one antenna line device in the antenna line devices currently connected to the radio frequency device.

In a possible design, the N1 antenna line devices include a second antenna line device, and the second antenna line device is not connected to the radio frequency device. The first information further indicates the radio frequency device to establish a connection to the second antenna line device.

In a possible design, the N1 antenna line devices are included in the N2 antenna line devices. The communication module is further configured to send third information, where the third information indicates a second antenna line device, and the second antenna line device is not connected to the radio frequency device.

In a possible design, the communication module is further configured to send fourth information, where the fourth information indicates the radio frequency device to disconnect from a third antenna line device, where a third device is included in the antenna line devices currently connected to the radio frequency device, and the third device is not included in the N1 antenna line devices.

According to a fifth aspect, the present disclosure provides a communication apparatus. The communication apparatus includes a processor, configured to implement the method described in the first aspect. The processor is coupled to a memory. The memory is configured to store instructions and data. When executing the instructions stored in the memory, the processor may implement the method described in the first aspect. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or another type of communication interface.

In a possible device, the communication apparatus includes:
a memory, configured to store program instructions; and
a processor, configured to obtain first information from a baseband unit BBU through a communication interface, where the first information indicates N1 antenna line devices, and the antenna line device is configured to control an antenna, and N1 is a positive integer.

The processor is further configured to maintain a connection between a radio frequency device and a first antenna line device, where the first antenna line device is included in the N1 antenna line devices.

According to a sixth aspect, the present disclosure provides a communication apparatus. The communication apparatus includes a processor, configured to implement the method described in the second aspect. The processor is coupled to a memory. The memory is configured to store instructions and data. When executing the instructions stored in the memory, the processor may implement the method described in the second aspect. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or another type of communication interface.

In a possible device, the communication apparatus includes:
a memory, configured to store program instructions;
a processor, configured to determine N1 antenna line devices, where the antenna line device is configured to control an antenna, and N1 is a positive integer.

The processor is further configured to send first information through the communication interface, where the first information indicates the N1 antenna line devices, the first information indicates a radio frequency device to maintain a connection to a first antenna line device, and the first antenna line device is included in the N1 antenna line devices.

According to a seventh aspect, the present disclosure provides a communication system, including the communication apparatus described in the third aspect or the fifth aspect, and the communication apparatus described in the fourth aspect or the sixth aspect.

According to an eighth aspect, the present disclosure further provides a computer program. When the computer program is run on a computer, the computer is enabled to perform the method provided in the first aspect or the second aspect.

According to a ninth aspect, the present disclosure further provides a computer program product, including instructions. When the instructions are run on a computer, the computer is enabled to perform the method provided in the first aspect or the second aspect.

According to a tenth aspect, the present disclosure further provides a computer-readable storage medium. The computer-readable storage medium stores computer programs or instructions, and when the computer programs or the instructions run on a computer, the computer is enabled to perform the method provided in the first aspect or the second aspect.

According to an eleventh aspect, the present disclosure further provides a chip. The chip is configured to read a computer program stored in a memory, to perform the method provided in the first aspect or the second aspect.

According to a twelfth aspect, the present disclosure further provides a chip system. The chip system includes a processor, configured to support a computer apparatus in implementing the method provided in the first aspect or the second aspect. In a possible design, the chip system further includes a memory. The memory is configured to store a program and data that are necessary for the computer apparatus. The chip system may include a chip, or may include a chip and another discrete component.

### BRIEF DESCRIPTION OF DRAWINGS

FIG. 1 is a schematic diagram of a structure of a communication system;
FIG. 2 is a schematic diagram of a structure of another communication system;
FIG. 3 is a schematic diagram of a structure of a remote electrical tilt antenna;
FIG. 4 shows a procedure of restoring a communication link;
FIG. 5 to FIG. 8 are schematic flowcharts of several communication methods according to the present disclosure; and
FIG. 9 and FIG. 10 are schematic diagrams of structures of communication apparatuses according to the present disclosure.

### DESCRIPTION OF EMBODIMENTS

To make the objectives, technical solutions, and advantages of the present disclosure clearer, the following further describes the present disclosure in detail with reference to the accompanying drawings.

In the present disclosure, "at least one" in the following means one or more. "A plurality of means two or more. The term "and/or" is an association relationship for describing associated objects and represents that three relationships may exist. For example, A and/or B may represent the following three cases: Only A exists, both A and B exist, and only B exists. The character "/" usually indicates an "or" relationship between the associated objects. In addition, it should be understood that although terms such as "first" and "second" may be used in the present disclosure to describe objects, these objects should not be limited by these terms. These terms are merely used to distinguish the objects from each other.

The terms "include" and "have" and any variations thereof mentioned in the following descriptions of the present disclosure are intended to cover a non-exclusive inclusion. For example, a process, a method, a system, a product, or a device that includes a series of steps or units is not limited to the listed steps or units, but optionally further includes another unlisted step or unit, or optionally further includes another step or unit that is inherent for the process, the method, the product, or the device. It should be noted that in the present disclosure, the terms such as "example" or "for example" are used to represent giving an example, an illustration, or a description. Any method or design scheme described in the present disclosure as "example" or "for example" should not be construed as being more preferred or advantageous than another method or design scheme. Exactly, use of the word "example", "for example", or the like is intended to present a related concept in a specific manner.

Technologies according to the present disclosure may be applied to various communication systems. For example, the communication system may be a 3^{rd} generation (3^{rd} generation, 3G) communication system (for example, a universal mobile telecommunications system (universal mobile telecommunications system, UMTS)), a 4^{th} generation (4^{th} generation, 4G) communication system (for example, a long term evolution (long term evolution, LTE) system), a 5^{th} generation (5^{th} generation, 5G) communication system, a worldwide interoperability for microwave access (worldwide interoperability for microwave access, WiMAX) or wireless local area network (wireless local area network, WLAN) system, a converged system of a plurality of systems, a future communication system, for example, a 6^{th} generation (6^{th} generation, 6G) communication system, or the like. The 5G communication system may be further referred to as a new radio (new radio, NR) system.

A network element in a communication system may send a signal to or receive a signal from another network element. The signal may include information, data, or the like. A network element may also be referred to as an entity, a network entity, a device, a communication device, a communication module, a node, a communication node, or the like. In the present disclosure, a network element is used as an example for description. For example, the communication system may include at least one terminal device and at least one access network device. A signal sending network element may be an access network device, and a signal receiving network element may be a terminal device. Alternatively, the signal sending network element may be a terminal device, and the signal receiving network element may be an access network device. In addition, it may be understood that if the communication system includes a plurality of terminal devices, signals may also be transmitted between the plurality of terminal devices. In other words, both the signal sending network element and the signal receiving network element may be terminal devices.

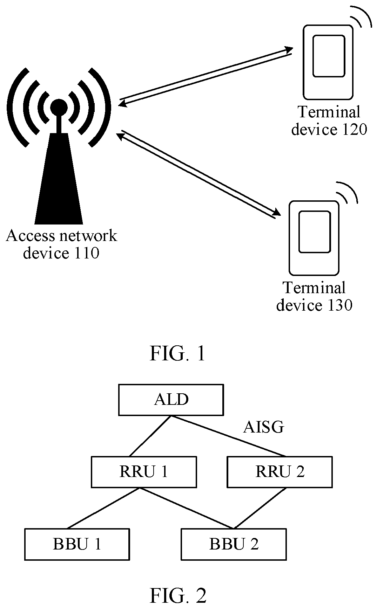

FIG. 1 shows a communication system 100. For example, the communication system 100 includes an access network device 110 and two terminal devices, to be specific, a terminal device 120 and a terminal device 130. At least one of the terminal device 120 and the terminal device 130 may send uplink data to the access network device 110. The access network device 110 may receive the uplink data. The access network device may send downlink data to the at least one of the terminal device 120 and the terminal device 130.

The following describes in detail the terminal device and the access network device in FIG. 1.

### (1) Terminal device

The terminal device is also referred to as a terminal, user equipment (user equipment, UE), a mobile station (mobile station, MS), a mobile terminal (mobile terminal, MT), or the like, and is a device that provides voice and/or data connectivity for a user. The terminal device may communicate with one or more core network devices through the access network device. The terminal device includes a handheld device with a wireless connection function, another processing device or a vehicle-mounted device connected to a wireless modem, and the like. The terminal device may be a portable, pocket-sized, handheld, computer built-in, or vehicle-mounted mobile apparatus. Examples of some terminal devices are a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a handheld computer, a mobile internet device (mobile internet device, MID), a wearable device, for example, a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal in a smart city (smart city), for example, a smart oiler, a wireless terminal device on a high-speed train, a wireless terminal in a smart home (smart home) such as a smart audio, a smart coffee machine, and a smart printer, and the like.

In the present disclosure, a communication apparatus configured to implement functions of the terminal device may be a terminal device, or may be a terminal device having a part of functions of the terminal, or may be an apparatus that can support the terminal device in implementing the functions, for example, a chip system. The apparatus may be installed in the terminal device. In the present disclosure, the chip system may include a chip, or may include a chip and another discrete component. In the technical solutions provided in the present disclosure, an example in which a communication apparatus configured to implement functions of the terminal device is a terminal device or UE is used for description.

### (2) Access network device

The access network device may be a base station (base station, BS). The access network device may also be referred to as a network device, an access node (access node, AN), or a radio access node (radio access node, RAN). The access network device may be connected to a core network (for example, an LTE core network or a 5G core network). The access network device may provide a wireless access service for the terminal device. Examples of some access network devices include but are not limited to at least one of the following: a next generation NodeB (generation NodeB, gNB) in 5G, an access network device in an open radio access network (open radio access network, O-RAN), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a transmitting and receiving point (transmitting and receiving point, TRP), a transmitting point (transmitting point, TP), a mobile switching center, and/or the like. Alternatively, the access network device may be a relay station, an access point, a vehicle-mounted device, a wearable device, an access network device in a future evolved public land mobile network (public land mobile network, PLMN), or the like.

The access network device may include a baseband unit (baseband unit, BBU) and a radio frequency device (or referred to as a radio frequency unit). When the access network device sends information to the terminal device, the BBU generates a baseband signal representing the information, and sends the baseband signal to the radio frequency device. The radio frequency device performs intermediate radio frequency processing on the baseband signal to obtain a radio frequency signal, and sends the radio frequency signal to an antenna system. The radio frequency signal is sent to the terminal device by the antenna system. The baseband signal is an original electrical signal that is sent by a transmitting end such as the foregoing access network device and that is not modulated (for example, spectrum migration and transformation). The baseband signal may be classified into a digital baseband signal and an analog baseband signal based on characteristics of the original electrical signal. The radio frequency device may be a remote radio unit (remote radio unit, RRU), an active antenna unit (active antenna unit, AAU), another unit, module, or device that has a radio frequency processing function, or the like. The antenna system may include a transmit antenna and a receive antenna.

The access network device is used as an example. The access network device may include a central unit (central unit, CU), a distributed unit (distributed unit, DU), and a radio unit (radio unit, RU). The DU is deployed on a BBU of the access network device, and has a function of processing a baseband signal. The RU is deployed on a radio frequency device of the access network device, and has a radio frequency function. A plurality of DUs may be controlled by one CU in a centralized manner. Optionally, the CU and the DU may be deployed on the BBU together, or that the CU may be separated from the DU may be designed. For example, the CU is deployed in another place outside the BBU. Optionally, the CU may further include a central unit control plane (CU control plane, CU-CP) or a central unit user plane (CU user plane, CU-UP). Optionally, any one of the DU, the CU, the CU-CP, the CU-UP, and the RU may be a software module, a hardware structure, or a combination of a software module and a hardware structure. This is not limited. Existence forms of different entities may be different. This is not limited. For example, the DU, the CU, the CU-CP, and the CU-UP are software modules, and the RU is a hardware structure. These modules and methods performed by the modules also fall within protection scope of the present disclosure.

Optionally, a function of the BBU in this application may be implemented by using a general-purpose device, for example, a general-purpose computer or server. In other words, the BBU described in this application may be replaced with another possible device. The device can implement the function of the BBU in this application.

A BBU and a radio frequency device of one access network device may be integrated in an equipment room. The radio frequency device is connected to an antenna system through a feeder. Alternatively, the BBU and the radio frequency device may be separated. For example, the BBU is installed in the equipment room, but the radio frequency device and the antenna system are disposed on a base station tower. The BBU is connected to the radio frequency device through an optical cable (optical cable). The radio frequency device is connected to the antenna system through a jumper (jumper). The access network device in which the BBU and the radio frequency device are separated may be further described as a distributed access network device or a distributed base station. One BBU may support connection to a plurality of radio frequency devices. One access network device may include one BBU and one or more radio frequency devices. Radio frequency devices connected to different BBUs may be the same. In addition, BBUs and/or radio frequency devices included in different access network devices may be the same. In other words, it may be understood that a plurality of access network devices may share one BBU, and a plurality of access network devices may share one or more radio frequency devices. Specifically, the BBU and the radio frequency device may communicate with each other according to a common public radio interface (common public radio interface, CPRI) protocol or an enhanced CPRI (enhanced CPRI, eCPRI) protocol. A communication link established between a BBU 1 and an RRU 1 may be described as a CPRI link or an eCPRI link.

In the present disclosure, a communication apparatus configured to implement functions of the BBU may be a BBU, or may be a device having a part of the functions of the BBU, or may be an apparatus that can support the BBU in implementing the functions, for example, a chip system, a hardware circuit, a software module, or a combination of a hardware circuit and a software module. The apparatus may be installed in the BBU. In the method according to the present disclosure, an example in which a communication apparatus configured to implement functions of the BBU is a BBU is used for description.

In the present disclosure, a communication apparatus configured to implement functions of the radio frequency device may be a radio frequency device, or may be a device having a part of the functions of the radio frequency device, or may be an apparatus that can support the radio frequency device in implementing the functions, for example, a chip system, a hardware circuit, a software module, or a combination of a hardware circuit and a software module. The apparatus may be installed in the radio frequency device. In the method according to the present disclosure, an example in which a communication apparatus configured to implement functions of the radio frequency device is a radio frequency device is used for description.

It should be understood that a quantity and types of devices in the communication system shown in FIG. 1 are merely used as examples. This is not limited in the present disclosure. In actual application, the communication system may further include more terminal devices and more access network devices, and may further include another network element, for example, may include a network management and/or a core network device. According to actual requirements of network operation of an operator, the network management may classify network management into three types: operation (Operation), administration (Administration), and maintenance (Maintenance). The network management may also be referred to as an operation administration and maintenance (operation administration and maintenance, OAM) network element, and OAM for short. The operation mainly completes analysis, prediction, planning and configuration of routine network and business. The maintenance is a routine operation, for example, network and service testing and fault management. The network management can detect network running status, optimize network connection and performance, improve network stability, and reduce network maintenance costs.

The method according to the present disclosure may be used for communication between an access network device and a terminal device, or may be used for communication between other communication devices, for example, communication between a macro base station and a micro base station in a wireless backhaul link, for another example, communication between two terminal devices in a sidelink (sidelink, SL). This is not limited.

The present disclosure relates to a remote electrical tilt antenna technology. An antenna line device (antenna line device, ALD) is introduced between a radio frequency device and an antenna system. A BBU may send a control instruction to the antenna line device through the radio frequency device. The antenna line device may control the antenna system according to the foregoing control instruction. For example, the antenna line device may perform at least one of the following operations on the antenna system: amplifying a radio frequency signal, adjusting a downtilt of the antenna system, or the like. Adjusting the downtilt of the antenna system can change an antenna coverage area. Antenna coverage is achieved by using a vertical main beam. Adjusting the downtilt can change a coverage area of the main beam. The antenna line device may include but is not limited to one or more of the following: a remote electrical tilt (remote electrical tilt, RET) unit, a tower mounted amplifier (tower mounted amplifier, TMA), an antenna sensor, or the like. In the remote electrical tilt antenna technology, an antenna line device may adjust a downtilt of an antenna system by using an electronic downtilt. The electronic downtilt is changing a coverage area of a main beam by changing an antenna element tilt angle when a physical antenna position is given.

The radio frequency device and the antenna line device may communicate with each other according to an antenna interface standards group (antenna interface standards group, AISG) protocol. FIG. 2 shows an architecture of a communication system. An example in which the radio frequency device is an RRU is used. The communication system includes a BBU 1, a BBU 2, an RRU 1, an RRU 2, and an ALD. Both the BBU 1 and the BBU 2 support connection to the RRU 1. The BBU 2 further support connection to the RRU 2. Both the RRU 1 and the RRU 2 support communication with the ALD according to the AISG protocol. An example in which the BBU 1 supports connection to the RRU 1 is used. It may further be described as that the BBU 1 has a capability of communicating with the RRU 1, or a communication link may be established between the BBU 1 and the RRU 1. The communication link may also be referred to as a link for short. That the RRU 1 supports communication with the ALD according to the AISG protocol is used as an example. It may further be described as that an AISG link may be established between the RRU 1 and the ALD. Specifically, an AISG protocol stack may include a physical layer, a data link layer, and an application layer. An RS485 serial port protocol is used in the physical layer. A high-level data link control (high-level data link control, HDLC) protocol is used in the data link layer. The radio frequency device and the antenna line device may be connected to a serial port bus to implement communication. An AISG link established between the radio frequency device and the antenna line device may alternatively be described as an HDLC link.

An example in which the antenna line device includes an RET unit is used. The RET unit may include an active part. The active part is a part that can perform software communication. The active part may be referred to as a remote control unit (remote control unit, RCU). The RCU is connected to the antenna system. The remote electrical tilt antenna includes the RCU and the antenna system. Optionally, the remote electrical tilt antenna may further include another unit or module. This is not limited. Optionally, the RCU includes an external RCU and/or a built-in RCU. The built-in RCU is integrated into the antenna system, and shares one housing with the antenna system. The external RCU is located outside the housing of the antenna system and connected to a corresponding remote electrical tilt interface on the antenna system.

For the remote electrical tilt antenna, a mechanically adjustable phase shifter can be used inside the antenna system. The BBU may send a control instruction to the radio frequency device. The radio frequency device controls, through the RET interface, the RCU to change a phase of the phase shifter inside the antenna system, to change a phase of a power signal obtained by some or all elements (or referred to as radiating elements) in an antenna array. This implements the downtilt of the vertical main beam. Specifically, the RCU may include a drive motor, a control circuit, and a mechanical transmission mechanism. The control circuit may communicate with the RET unit, input a signal corresponding to the control instruction for the radio frequency device, and output a signal used for controlling the drive motor. When the drive motor rotates based on the signal output by the control circuit, the mechanical transmission mechanism may be controlled to change the phase of the phase shifter in the antenna system.

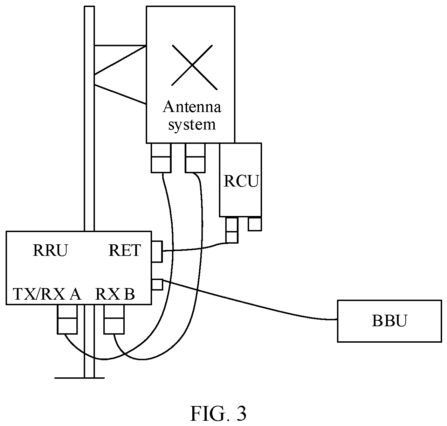

Specifically, the RET unit may be deployed on the radio frequency device and used as the RET interface of the radio frequency device. The RCU may be connected to the RET interface of the radio frequency device through an AISG control cable. An example in which the radio frequency device is an RRU is used. FIG. 3 is a schematic diagram of a structure of a remote electrical tilt antenna. A BBU and an RRU are connected through an optical fiber. The RRU and an antenna system are deployed on a base station tower. The RRU is connected to the antenna system through a jumper (jumper). Specifically, an antenna hardware interface (antenna hardware interface, ANT) configured to connect to the antenna system is deployed on the RRU. The antenna hardware interface is connected to the antenna system through the jumper. For example, FIG. 3 shows that the ANT on the RRU includes a transport (transport, TX)/receive (receive, RX) port A and an RX port B. The RET interface (or referred to as the RET unit) is disposed on the RRU. The antenna system is connected to an external RCU. The RET interface is connected to the RCU through an AISG control cable.

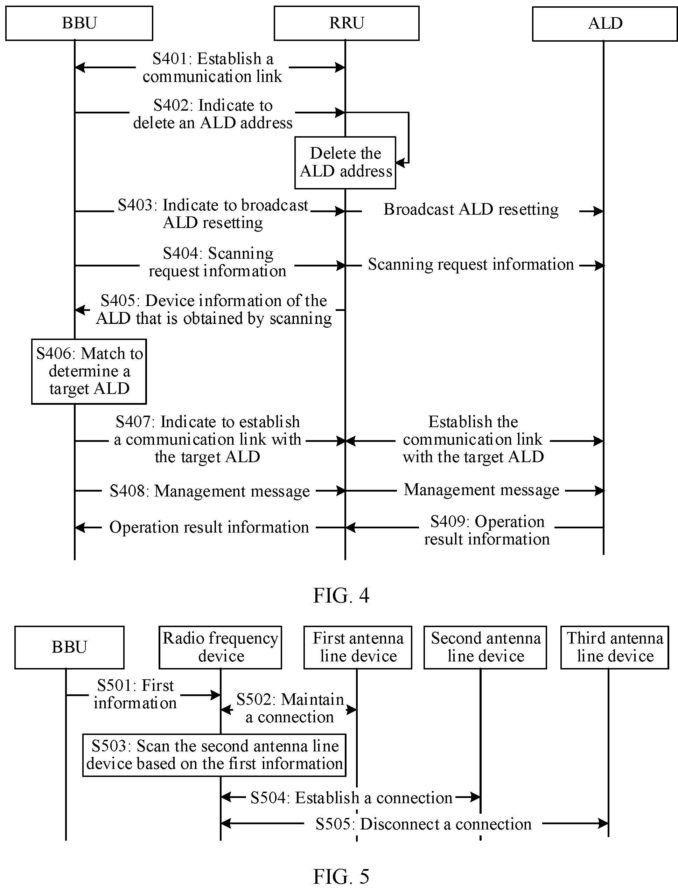

Optionally, a communication link between the BBU and the RRU is unstable. After connection between the BBU and the RRU is interrupted and restored, the BBU indicates the RRU to disconnect from all antenna line devices (or the BBU indicates the RRU to clear all antenna line devices currently connected to the RRU), rescan the antenna line device, and establish a communication link between the RRU and the antenna line device scanned by the RRU. FIG. 4 shows a procedure for restoring a communication link. The procedure includes the following steps.

S401: Establish a communication link between a BBU and an RRU.

Specifically, in this step, the communication link between the BBU and the RRU is established after interruption.

S402: The BBU indicates the RRU to disconnect communication links between the RUU and all ALDs currently connected to the RRU.

For example, as shown in S402 in FIG. 4, the BBU indicates the RRU to delete addresses of all ALDs currently connected to the RRU, and the RRU deletes the foregoing addresses of all the ALDs. An address of the ALD may also be described as a communication address of the ALD, and may be allocated by the RRU.

S403: The BBU indicates the RRU to broadcast related information about resetting the ALD, and the RRU broadcasts the related information about resetting the ALD.

The broadcast of the related information about resetting the ALD may enable the ALD device to learn that a historically allocated communication address has been cleared. It is convenient to respond to a related scanning device, for example, the RRU in S404, when no communication address is allocated to the ALD.

S404: The BBU sends scanning request information to the RRU, where the scanning request information indicates the RRU to scan the ALD. The RRU scans the ALD based on the scanning request information.

S405: The RRU sends device information of the ALD that is obtained by scanning to the BBU.

S406: The BBU matches the device information of the ALD that is obtained by the RRU by scanning with device information of an ALD managed by the BBU, to determine a target ALD to which the RRU needs to be connected. The target ALD is included in the ALD managed by the BBU, and the target ALD is included in the ALD scanned by the RRU.

S407: The BBU indicates the RRU to establish a communication link with the target ALD, and the RRU allocates a corresponding address to the target ALD.

For example, the ALD in FIG. 4 corresponds to the target ALD in this step.

S408: The BBU sends a management message to the RRU, where the management message indicates the ALD to perform an operation and maintenance operation on the antenna system. For example, the operation and maintenance operation may include service operations such as amplifying a radio frequency signal or adjusting a downtilt of the antenna system, or may include operations for maintaining a device, such as software upgrade and alarm reporting. The RRU forwards the management message to the address of the target ALD.

S409: The RRU obtains operation result information corresponding to the operation and maintenance operation from the address of the target ALD, and sends the operation result information to the BBU.

When a large quantity of antenna line devices are connected to the RRU, a manner of rescanning and reestablishing a link after disconnecting a link is inefficient, and operation of a communication service is easily interfered.

Based on this, the present disclosure provides a communication method, to improve link recovery efficiency. In the present disclosure, when the link between the BBU and the radio frequency device restores after interruption, the radio frequency device may be indicated to maintain, in an antenna line device currently connected to the radio frequency device, a connection between the radio frequency device and an antenna line device that the BBU expects to be connected.

The following describes in detail the communication method according to the present disclosure with reference to Solution 1 to Solution 4. In these methods, included steps or operations are merely examples. Another operation or variations of various operations may be performed in the present disclosure. In addition, the steps may be performed in a sequence different from that presented in the present disclosure, and it is possible that not all operations need to be performed.

### Solution 1

FIG. 5 shows a communication method. The method mainly includes the following steps.

S501: A BBU sends first information to a radio frequency device.

The first information indicates N1 antenna line devices, the antenna line device is configured to control an antenna, and N1 is a positive integer. The N1 antenna line devices may be antenna line devices to which the BBU expects the RRU to be connected. For example, the N1 antenna line devices are antenna line devices managed (or referred to as maintained) by the BBU. A quantity of all antenna line devices managed by the BBU may be N1. The antenna line devices managed by the BBU may be preconfigured. For example, an operator of the BBU configures the antenna line devices managed by the BBU for the BBU.

Optionally, identity information of the antenna line devices managed by the BBU may be further configured on the BBU. Identity information of one antenna line device is for identifying the antenna line device, and may include, for example, a manufacturer code of the antenna line device and a device serial number of the antenna line device. Optionally, the first information may include identity information of the N1 antenna line devices.

Optionally, the BBU may send the first information to the radio frequency device after the communication link between the BBU and the radio frequency device is interrupted and restored. The radio frequency device may be an RRU or an AAU, and the antenna line device is an ALD.

Specifically, that the BBU sends the first information to the radio frequency device may be implemented with reference to either of the following two manners.

In one manner, the BBU sends a first message to the radio frequency device, where the first message includes identity information of each of the N1 antenna line devices. For example, the first message may include one array, the array includes N1 elements, and each element indicates identity information of one of the N1 antenna line devices. A length of the array corresponds to a value of N1. The first message may be implemented by using a network configuration protocol (network configuration protocol, NETCONF) interface message.

In another manner, the BBU sends N1 second messages to the radio frequency device, where each second message includes identity information of one of the N1 antenna line devices, and the N1 second messages are in a one-to-one correspondence with the N1 antenna line devices. The second message may be implemented by using a NETCONF interface message.

S502: The radio frequency device maintains a connection between the radio frequency device and a first antenna line device.

The first antenna line device is included in the N1 antenna line devices, and the first antenna line device is included in antenna line devices currently connected to the radio frequency device. Optionally, there is one or more first antenna line devices.

Optionally, the first information may further indicates the radio frequency device to maintain a connection to the first antenna line device.

Specifically, the radio frequency device may determine, based on the N1 antenna line devices indicated by the first information, the first antenna line device included in the N1 antenna line devices in the antenna line devices currently connected to the radio frequency device. The radio frequency device maintains a connection to the first antenna line device. That the radio frequency device maintains a connection to the first antenna line device may also be described as: The radio frequency device reserves a communication link between the radio frequency device and the first antenna line device.

Optionally, the radio frequency device may store identity information of an antenna line device currently connected to the radio frequency device. Corresponding to S501, when the first information includes the identity information of the N1 antenna line devices, the radio frequency device may match the identity information of the antenna line devices currently connected to the radio frequency device with the identity information of the N1 antenna line devices, to determine the foregoing first antenna line device.

Optionally, the radio frequency device may further store link information corresponding to the antenna line device currently connected to the radio frequency device, and the link information corresponding to the antenna line device indicates a communication link between the antenna line device and the radio frequency device. For example, the radio frequency device may allocate a communication address to an antenna line device that has established a communication link with the radio frequency device. The foregoing link information may include the communication address of the antenna line device. That the radio frequency device maintains a connection between the radio frequency device and the first antenna line device may specifically include: The radio frequency device reserves a communication address of the first antenna line device.

Optionally, if the antenna line devices managed by the BBU further include a second antenna line device that is not connected to the radio frequency device, the radio frequency device may further scan the second antenna line device. There may be one or more second antenna line devices. This is not limited in the present disclosure. For example, after S501 and S502 are performed, S503 and S504 may be further performed.

S503: The radio frequency device scans the second antenna line device based on the first information.

The second antenna line device is included in the N1 antenna line devices, and the second antenna line device is not connected to the radio frequency device.

Corresponding to S501, when the first information includes the identity information of the N1 antenna line devices, the radio frequency device may determine, based on identity information of the second antenna line device, an antenna line device corresponding to the identity information by scanning and identification, as the second antenna line device. For example, with reference to the remote electrical tilt antenna shown in FIG. 3, an example in which the radio frequency device is an RRU is used. The RRU may scan and identify, based on the identity information of the second antenna line device, an ALD corresponding to the identity information on a serial port bus (for example, an RS485 serial port bus), in other words, determine the second antenna line device.

In addition, it may be understood that when the N1 antenna line devices indicated by the first information include the second antenna line device that is not connected to the radio frequency device, the BBU may implicitly indicate, by using the first information, the radio frequency device to scan the second antenna line device.

S504: The radio frequency device establishes a connection between the radio frequency device and the second antenna line device.

Specifically, the radio frequency device may establish a communication link with the second antenna line device. The radio frequency device may send, to the second antenna line device, a communication address allocated to the second antenna line device. It should be noted that when there are a plurality of second antenna line devices, the radio frequency device may send a unique communication address to each of the plurality of second antenna line devices. In other words, communication addresses of different second antenna line devices in the plurality of second antenna line devices are different.

Optionally, the radio frequency device may exchange information with the first antenna line device and/or the second antenna line device through the serial port bus. For example, the radio frequency device may forward a management message from the BBU to the first antenna line device and/or the second antenna line device through the bus. The management message indicates a corresponding antenna line device to perform an operation and maintenance operation on an antenna system. The operation and maintenance operation may include at least one of the following: amplifying a radio frequency signal, adjusting a downtilt of the antenna system, another operation, or the like.

Optionally, if a third antenna line device that is not included in the N1 antenna line devices exists in the antenna line devices currently connected to the radio frequency device, the radio frequency device may disconnect from the third antenna line device. There may be one or more third antenna line devices. For example, after S501 and S502 are performed, S505 may be further performed.

S505: The radio frequency device disconnects the radio frequency device from the third antenna line device.

The third antenna line device is included in the antenna line devices currently connected to the radio frequency device, and the third antenna line device is not included in the N1 antenna line devices.

Specifically, the radio frequency device may delete a communication address of the third antenna line device, and broadcast information for indicating to reset the third antenna line device. According to the method, it is avoided that the third antenna line device cannot respond to scanning of another radio frequency device that needs to connect to the third antenna line device, and normal establishment of another communication link is ensured.

In addition, it may be understood that, when the N1 antenna line devices indicated by the first information do not include the third antenna line device connected to the radio frequency device, the BBU may implicitly indicate, by using the first information, the radio frequency device to disconnect from the third antenna line device. The radio frequency device may determine the third antenna line device based on the first information.

In addition, it may be understood that execution of S503 to S505 is as follows: After S501 and S502 are performed, S503 and S504 may be performed, or S505 may be performed. Alternatively, after S501 and S502 are performed, S503 to S505 may be performed. The following describes several possible implementation cases of Solution 1.

Case 1: If the N1 antenna line devices partially overlap with the antenna line devices currently connected to the radio frequency device, and N1 indicates the foregoing partially overlapped antenna line devices, S501 to S505 are performed. For example, N1 is 6, and the radio frequency device is currently connected to seven antenna line devices. The radio frequency device determines, based on the first information, that there are four first antenna line devices that are included in the N1 antenna line devices and whose connections are maintained, in the seven antenna line devices currently connected to the radio frequency device. There are three third antenna line devices that can be disconnected from the radio frequency device. There are two second antenna line devices that need to be scanned by the radio frequency device.

A sequence of performing S503 to S505 is not limited in the present disclosure. For example, S503 and S504 are performed first and then S505 is performed. Alternatively, S505 is first performed and then S503 and S504 are performed. Alternatively, S503 and S505 are performed simultaneously, and then S504 is performed. Case 2: If the N1 antenna line devices correspond to some antenna line devices currently connected to the radio frequency device, S501, S502, and S505 are performed, and S503 and S504 do not need to be performed. For example, N1 is 4, and the radio frequency device is currently connected to six antenna line devices. The radio frequency device determines, based on the first information, that there are four first antenna line devices that are included in the N1 antenna line devices and whose connections are maintained, in the six antenna line devices currently connected to the radio frequency device. There are two third antenna line devices that can be disconnected from the radio frequency device. The radio frequency device does not need to scan the second antenna line device.

Case 3: If the antenna line devices currently connected to the radio frequency device correspond to some of the N1 antenna line devices, S501 to S504 are performed, and S505 does not need to be performed. For example, N1 is 6, and the radio frequency device is currently connected to four antenna line devices. The radio frequency device determines, based on the first information, that there are four first antenna line devices that are included in the N1 antenna line devices and whose connections are maintained, in the four antenna line devices currently connected to the radio frequency device. There are two second antenna line devices that need to be scanned by the radio frequency device. The radio frequency device does not need to be disconnected from the antenna line device.

Case 4: If the N1 antenna line devices correspond to all antenna line devices currently connected to the radio frequency device, S501 and S502 are performed, and S503 to S505 do not need to be performed. For example, a value of N1 is 3, and the radio frequency device is currently connected to three antenna line devices. The radio frequency device determines, based on the first information, that there are three first antenna line devices that are included in the N1 antenna line devices and whose connections are maintained, in the three antenna line devices currently connected to the radio frequency device. The radio frequency device does not need to scan the second antenna line device. The radio frequency device does not need to be disconnected from the antenna line device.

In the foregoing communication method provided in this solution, related information of the antenna line device currently connected to the radio frequency device is stored, so that when a communication link between the BBU and the radio frequency device is unstable, link recovery efficiency can be improved. To be specific, a communication link between the radio frequency device and an antenna line device that the BBU expects to be connected is quickly established or restored, to quickly restore a management capability of the BBU for the antenna line device and ensure running of a communication service.

### Solution 2

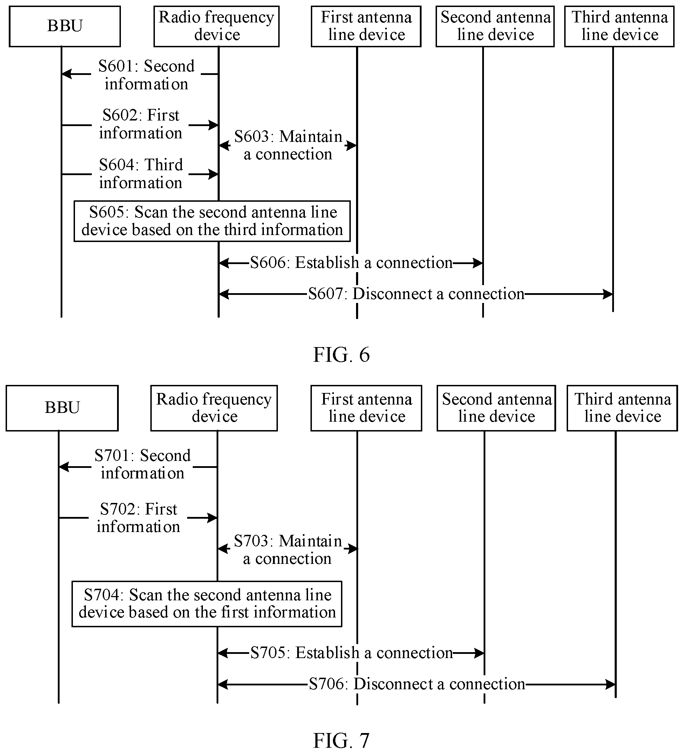

FIG. 6 shows a communication method. The method mainly includes the following steps.

S601: A radio frequency device sends second information to a BBU.

The second information indicates N2 antenna line devices currently connected to the radio frequency device, and N2 is a positive integer.

Specifically, the radio frequency device may store identity information of an antenna line device currently connected to the radio frequency device. The second information may include identity information of the N2 antenna line devices. Identity information of one antenna line device is for identifying the antenna line device, and may include, for example, a manufacturer code of the antenna line device and a device serial number of the antenna line device.

For definitions of the radio frequency device and the antenna line device, refer to the descriptions in S501 for understanding. Details are not described in the present disclosure again.

Specifically, that the radio frequency device sends the second information to the BBU may be implemented with reference to either of the following two manners.

In one manner, the radio frequency device sends a third message to the BBU, where the third message includes identity information of each of the N2 antenna line devices. For example, the third message may include one array, the array includes N2 elements, and each element indicates identity information of one of the N2 antenna line devices. A length of the array corresponds to a value of N2. The third message may be implemented by using a NETCONF interface message.

In another manner, the radio frequency device sends N2 fourth messages to the BBU, where each second message includes identity information of one of the N2 antenna line devices, and the N2 fourth messages are in a one-to-one correspondence with the N2 antenna line devices. The fourth message may be implemented by using a NETCONF interface message.

S602: The BBU sends first information to the radio frequency device.

The first information indicates N1 antenna line devices, and the N1 antenna line devices are included in the N2 antenna line devices. The antenna line device is configured to control an antenna, and N1 is a positive integer.

Specifically, the N1 antenna line devices may be an antenna line device to which the BBU expects the RRU to remain connected in the N2 antenna line devices. For example, the N1 antenna line devices may be included in antenna line devices managed (or referred to as maintained) by the BBU. A quantity of antenna line devices managed by the BBU may be greater than or equal to N1. Specifically, if the N2 antenna line devices include all antenna line devices managed by the BBU, the N1 antenna line devices are all antenna line devices managed by the BBU. Alternatively, if the N2 antenna line devices include some antenna line devices managed by the BBU, the N1 antenna line devices are the some antenna line devices managed by the BBU.

For the antenna line devices managed by the BBU, refer to the descriptions in S501 for understanding. Details are not described in the present disclosure again.

Optionally, identity information of all antenna line devices managed by the BBU may be further configured on the BBU. Corresponding to S601, when the second information includes the identity information of the N2 antenna line devices, the BBU may match the identity information of the N2 antenna line devices with identity information of all antenna line devices managed by the BBU, to determine the foregoing N1 antenna line devices.

In addition, optionally, the first information further indicates the radio frequency device to maintain connections to the N1 antenna line devices. For example, when the N1 antenna line devices are some of the N2 antenna line devices, the first information may include identity information of the N1 antenna line devices. Alternatively, when the N1 antenna line devices are all antenna line devices in the N2 antenna line devices, the first information may include indication information indicating the radio frequency device to maintain all connections to the antenna line devices, for example, indicating by using a specified value (1 or 0). In this way, signaling overheads can be reduced. For implementation of the first information, refer to the descriptions in S501 for implementing. Details are not described in the present disclosure again.

S603: The radio frequency device maintains a connection between the radio frequency device and a first antenna line device.

The first antenna line device is included in the N1 antenna line devices, and a quantity of first antenna line devices is N1.

Specifically, the radio frequency device stores link information corresponding to the N2 antenna line devices currently connected to the radio frequency device. For related link information corresponding to the antenna line device, refer to the definition in S502 for understanding. Details are not described in the present disclosure again. That the radio frequency device maintains a connection between the radio frequency device and the first antenna line device may specifically include: The radio frequency device reserves a communication address of the first antenna line device.

Optionally, if the antenna line devices managed by the BBU further include a second antenna line device that is not connected to the radio frequency device, the radio frequency device may further scan the second antenna line device. There may be one or more second antenna line devices. This is not limited in the present disclosure. For example, after S601 to S603 are performed, S604 to S606 may be further performed.

S604: The BBU sends third information to the radio frequency device.

The third information indicates the second antenna line device. The second antenna line device is not connected to the radio frequency device. Optionally, the third information may further indicates the radio frequency device to scan the second antenna line device.

Specifically, that the BBU sends the third information to the radio frequency device may be implemented with reference to either of the following two manners.

In one manner, the BBU sends a fifth message to the radio frequency device, where the fifth message includes identity information of the second antenna line device. For example, when there is one second antenna line device, the fifth message may include one field indicating the identity information of the second antenna line device. For example, when there are a plurality of second antenna line devices, the fifth message may include one array. A length of the array corresponds to a quantity of second antenna line devices. Each element in the array represents identity information of one second antenna line device, and different elements represent different identity information. The fifth message may be implemented by using a network configuration protocol NETCONF interface message.

In another manner, when there are a plurality of second antenna line devices, the BBU sends a plurality of sixth messages to the radio frequency device, where each sixth message includes identity information of one of the plurality of second antenna line devices, and the plurality of sixth messages are in a one-to-one correspondence with the plurality of second antenna line devices. The sixth message may be implemented by using a NETCONF interface message.

S605: Scan the second antenna line device based on the third information.

This step may be implemented with reference to the solution in S503. Details are not described in the present disclosure again.

S606: The radio frequency device establishes a connection between the radio frequency device and the second antenna line device.

This step may be implemented with reference to the solution in S504. Details are not described in the present disclosure again.

Optionally, if the N2 antenna line devices currently connected to the radio frequency device further include a third antenna line device other than the N1 antenna line devices, there may be one or more third antenna line devices. This is not limited in the present disclosure. The radio frequency device may disconnect the radio frequency device from the third antenna line device. For example, after S601 to S603 are performed, S607 may be further performed.

S607: The radio frequency device disconnects the radio frequency device from the third antenna line device.

The third antenna line device is included in the N2 antenna line devices currently connected to the radio frequency device, and the third antenna line device is not included in the N1 antenna line devices.

This step may be implemented with reference to the solution in S505. Details are not described in the present disclosure again.

In addition, it may be understood that execution of S604 to S607 is as follows: After S601 to S603 are performed, S604 to S606 may be performed, or S607 may be performed. Alternatively, after S601 to S603 are performed, S604 to S607 may be performed. The following describes several possible implementation cases of Solution 2.

Case 1: If the N2 antenna line devices partially overlap with all antenna line devices managed by the BBU, and N1 indicates the foregoing partially overlapped antenna line devices, S601 to S607 are performed. For example, N1 is 4, and N2 is 6. The radio frequency device determines, based on the first information, that there are four (N1) first antenna line devices whose connections are maintained, in the six (N2) antenna line devices currently connected to the radio frequency device. In this case, there are two third antenna line devices that can be disconnected from the radio frequency device. If there are five antenna line devices managed by the BBU in total, the third information indicates one second antenna line device. The radio frequency device needs to scan one second antenna line device based on the third information. In this case, all antenna line devices managed by the BBU include the N1 antenna line devices and the second antenna line device. The N2 antenna line devices include the first antenna line device and a third-line device.

A sequence of performing S604 to S607 is not limited in the present disclosure. For example, S604 to S606 are performed first and then S607 is performed. Alternatively, S607 is first performed and then S604 to S606 are performed. Alternatively, S604 and S607 are performed simultaneously, and then S605 and S606 are performed.

Case 2: If the N2 antenna line devices correspond to some antenna line devices managed by the BBU, and the N1 antenna line devices are the same as the N2 antenna line devices, S601 to S606 are performed, and S607 does not need to be performed. For example, N1 is 4, and N2 is 4. The radio frequency device determines, based on the first information, that there are four (N1) first antenna line devices whose connections are maintained, in the four (N2) antenna line devices currently connected to the radio frequency device. The radio frequency device does not need to be disconnected from the antenna line device. If there are five antenna line devices managed by the BBU in total, the third information indicates one second antenna line device. The radio frequency device needs to scan one second antenna line device based on the third information. In this case, all antenna line devices managed by the BBU include the N1 antenna line devices and the second antenna line device. The first antenna line devices are all antenna line devices in the N2 antenna line devices.

Case 3: If the N2 antenna line devices correspond to all antenna line devices managed by the BBU, the N1 antenna line devices are all antenna line devices managed by the BBU, and the N1 antenna line devices correspond to some of the N2 antenna line devices, S601 to S603 and S607 are performed, and S604 to S606 do not need to be performed. For example, N1 is 4, and N2 is 6. The radio frequency device determines, based on the first information, that there are four (N1) first antenna line devices whose connections are maintained, in the six (N2) antenna line devices currently connected to the radio frequency device. There are two third antenna line devices that can be disconnected from the radio frequency device. The BBU does not need to indicate, by using the third information, the radio frequency device to scan the second antenna line device. In this case, the N2 antenna line devices include the first antenna line device and a third-line device.

Case 4: If the N2 antenna line devices are all antenna line devices managed by the BBU, and the N1 antenna line devices are all antenna line devices managed by the BBU, S601 to S603 are performed, and S604 to S607 do not need to be performed. For example, N1 is 3, and N2 is 3. The radio frequency device determines, based on the first information, that there are three (N1) first antenna line devices whose connections are maintained, in the three (N2) antenna line devices currently connected to the radio frequency device. The BBU does not need to indicate, by using the third information, the radio frequency device to scan the second antenna line device, and the radio frequency device does not need to be disconnected from the antenna line device. In this case, the N2 antenna line devices, the N1 antenna line devices, and the first antenna line device are all the same.

In the foregoing communication method provided in this solution, a radio frequency device notifies a BBU of an antenna line device currently connected to the radio frequency device, so that the BBU implements a corresponding link restoration measure based on a connection status between the radio frequency device and the antenna line device, for example, one or more of maintaining a connection, disconnecting a connection, or establishing a connection. When a communication link between the BBU and the radio frequency device is unstable, link recovery efficiency can be improved, to quickly restore a management capability of the BBU for the antenna line device and ensure running of a communication service.

### Solution 3

FIG. 7 shows a communication method. The method mainly includes the following steps.

S701: A radio frequency device sends second information to a BBU.

The second information indicates N2 antenna line devices currently connected to the radio frequency device, and N2 is a positive integer.

This step may be implemented with reference to S601. Details are not described in the present disclosure again.

S702: The BBU sends first information to the radio frequency device.

The first information indicates N1 antenna line devices, and the N1 antenna line devices are some or all of all antenna line devices managed by the BBU.

Specifically, this step may be implemented with reference to S501. Details are not described in the present disclosure again.

S703: The radio frequency device maintains a connection between the radio frequency device and a first antenna line device.

Specifically, this step may be implemented with reference to S502. Details are not described in the present disclosure again.

Optionally, if the antenna line devices managed by the BBU further include a second antenna line device that is not connected to the radio frequency device, the radio frequency device may further scan the second antenna line device. For example, after S701 to S703 are performed, S704 and S705 may be further performed.

S704: The radio frequency device scans the second antenna line device based on the first information.

This step may be implemented with reference to S503. Details are not described in the present disclosure again.

S705: The radio frequency device establishes a connection between the radio frequency device and the second antenna line device.

This step may be implemented with reference to S504. Details are not described in the present disclosure again.

Optionally, if a third antenna line device that is not included in the N1 antenna line devices exists in the antenna line device currently connected to the radio frequency device, the radio frequency device may disconnect the radio frequency device from the third antenna line device. For example, after S701 to S703 are performed, S706 may be further performed.

S706: The radio frequency device disconnects the radio frequency device from the third antenna line device.

This step may be implemented with reference to S505. Details are not described in the present disclosure again.

In addition, it may be understood that execution of S704 to S706 is as follows: After S701 to S703 are performed, S704 and S705 may be performed, or S706 may be performed. Alternatively, after S701 to S703 are performed, S704 to S706 may be performed. A possible implementation case of Solution 3 may be understood with reference to a possible implementation case of Solution 1. Details are not described in the present disclosure again. When S704 to S706 are performed, a sequence of performing S704 to S706 is not limited in the present disclosure. For example, S704 and S705 are performed first and then S706 is performed. Alternatively, S706 is first performed and then S704 and S705 are performed. Alternatively, S704 and S706 are performed simultaneously, and then S705 is performed.

In this solution, the BBU and the radio frequency device exchange the antenna line devices managed by the BBU and the antenna line devices currently connected to the radio frequency device. Both the BBU and the radio frequency device may determine an antenna line device whose current communication link is normal, to quickly restore a management capability of the BBU for the antenna line device and ensure running of a communication service.

### Solution 4

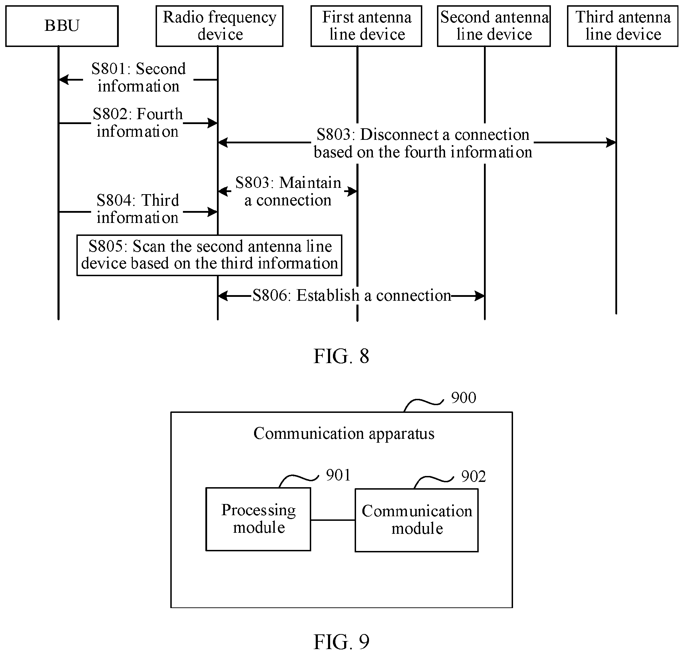

FIG. 8 shows a communication method. The method mainly includes the following steps.

S801: A radio frequency device sends second information to a BBU.

The second information indicates N2 antenna line devices currently connected to the radio frequency device, and N2 is a positive integer.

This step may be implemented with reference to S601. Details are not described in the present disclosure again.

S802: The BBU sends fourth information to the radio frequency device.

The fourth information indicates to disconnect the radio frequency device from a third antenna line device. The third antenna line device is included in the N2 antenna line devices currently connected to the radio frequency device, and the third antenna line device is not an antenna line device managed by the BBU, or the description is as follows: The third antenna line device is not an antenna line device to which the BBU expects the radio frequency device to be connected. There may be one or more third antenna line devices.

Specifically, the fourth information may include identity information of the third antenna line device. For definition of the identity information, refer to the descriptions in S501 for understanding. Details are not described in the present disclosure again.

Specifically, that the BBU sends the fourth information to the radio frequency device may be implemented with reference to either of the following two manners.

In one manner, the BBU sends a seventh message to the radio frequency device, where the seventh message includes the identity information of the third antenna line device. For example, when there is one third antenna line device, the seventh message may include one field indicating the identity information of the third antenna line device. For example, when there are a plurality of third antenna line devices, the seventh message may include one array. A length of the array corresponds to a quantity of third antenna line devices. Each element in the array represents identity information of one third antenna line device, and different elements represent different identity information. The seventh message may be implemented by using a network configuration protocol NETCONF interface message.

In another manner, when there are a plurality of third antenna line devices, the BBU sends a plurality of eighth messages to the radio frequency device, where each eighth message includes identity information of one of the plurality of third antenna line devices, and the plurality of eighth messages are in a one-to-one correspondence with the plurality of third antenna line devices. The eighth message may be implemented by using a NETCONF interface message.

S803: The radio frequency device disconnects the radio frequency device from the third antenna line device based on the fourth information.

Specifically, refer to the descriptions in S502. The radio frequency device may store identity information and link information of an antenna line device currently connected to the radio frequency device. The radio frequency device may determine, based on the identity information of the third antenna line device included in the fourth information, the third antenna line device from the antenna line devices currently connected to the radio frequency device. Further, the radio frequency device may disconnect the radio frequency device from the third antenna line device with reference to the descriptions in S505.

Optionally, if the N2 antenna line devices currently connected to the radio frequency device further include another antenna line device other than the third antenna line device, for example, an antenna line device denoted as a first antenna line device. There may be one or more first antenna line devices. In this case, the radio frequency device may determine that the first antenna line device is an antenna line device that the BBU expects to be connected, or the first antenna line device is included in the antenna line devices managed by the BBU. Based on this, it may be understood that the fourth information further implicitly indicates to maintain a previous connection between the radio frequency device and the first antenna line device. According to S803 shown in FIG. 8, when the radio frequency device disconnects from the third antenna line device based on the fourth information, the radio frequency device maintains a connection to the first antenna line device.

Specifically, for a solution in which the radio frequency device is disconnected from the third antenna line device, refer to the descriptions in S505 for implementation. For a solution in which the radio frequency device maintains a connection to the first antenna line device, refer to the descriptions in S502 for implementation. Details are not described in the present disclosure again.

Optionally, if the antenna line devices managed by the BBU further include a second antenna line device that is not connected to the radio frequency device, the BBU may further indicate the radio frequency device to scan the second antenna line device. There may be one or more second antenna line devices. For example, after S801 to S803 are performed, S804 to S806 may be further performed.

S804: The BBU sends third information to the radio frequency device.

The third information indicates the second antenna line device, and the second antenna line device is not connected to the radio frequency device. Optionally, there may be one or more second antenna line devices.

Specifically, this step may be implemented with reference to the descriptions in S603. Details are not described in the present disclosure again.

S805: Scan the second antenna line device based on the third information.

This step may be implemented with reference to the solution in S503. Details are not described in the present disclosure again.

S806: The radio frequency device establishes a connection between the radio frequency device and the second antenna line device.

This step may be implemented with reference to the solution in S504. Details are not described in the present disclosure again.

The following describes several possible implementation cases of Solution 4.

Case 1: If the N2 antenna line devices include all antenna line devices managed by the BBU, and a quantity of third-day devices in the N2 antenna line devices is less than that of all antenna line devices managed by the BBU, S801 to S803 are performed, and S804 to S806 are not performed. For example, N2 is 6, and all antenna line devices managed by the BBU are four antenna line devices in the N2 antenna line devices. The BBU may indicate, by using the fourth information, that there are two third antenna line devices that are disconnected from the radio frequency device. The BBU does not send the third information, and the radio frequency device does not need to scan the second antenna line device.

Case 2: If the N2 antenna line devices include some antenna line devices managed by the BBU, and a quantity of third-day devices in the N2 antenna line devices is less than that of the foregoing some antenna line devices managed by the BBU, S801 to S806 are performed. For example, N2 is 6, there are six antenna line devices managed by the BBU in total, and the N2 antenna line devices include four antenna line devices managed by the BBU. The BBU indicates, by using the fourth information, that there are two third antenna line devices that are disconnected from the radio frequency device. The BBU indicates, by using the third information, the radio frequency device to scan two second antenna line devices.

According to the foregoing communication method provided in this solution, the BBU indicates to disconnect some antenna line devices connected to the radio frequency device, and a connection to another antenna line device managed by the BBU is maintained. When a communication link between the BBU and the radio frequency device is unstable, link recovery efficiency can be improved, to quickly restore a management capability of the BBU for the antenna line device and ensure running of a communication service. This solution may be applied to the following scenario to reduce signaling overheads. In the antenna line devices currently connected to the radio frequency device, a quantity of antenna line devices managed by the BBU exceeds a quantity of antenna line devices that are not managed by the BBU.

According to any one of the foregoing Solution 1 to Solution 4, a larger quantity of antenna line devices currently connected to the radio frequency device indicates a larger quantity of antenna line devices that the BBU expects to be connected in antenna line devices currently connected to the radio frequency device, and a larger quantity of communication links whose connections can be directly maintained. A link recovery speed is not affected by the increase in the quantity of antenna line devices. However, by using a related technology, regardless of whether the antenna line devices currently connected to the radio frequency device overlap the antenna line devices that the BBU expects to be connected, a larger quantity of antenna line devices currently connected to the radio frequency device and/or a larger quantity of antenna line devices that the BBU expects to be connected indicates a slower speed of disconnecting a link and rescanning to establish a communication link. For example, refer to Table 1. An example in which an antenna line device currently connected to the radio frequency device is an antenna line device that the BBU expects to be connected is used to describe comparison between link recovery speeds of Solution 1 to Solution 4 and the related technology.

**Table 1**

| | | | | |
|---|---|---|---|---|
| Quantity of antenna line devices | 3 | 6 | 9 | 18 |
| Related technology link recovery speed (second) | 30 | 60 | 180 | 360 |
| Solution 1 to Solution 4 link recovery speed (second) | 3 | 3 | 3 | 3 |

It can be learned that, compared with the related technology, link recovery efficiency can be improved in Solution 1 to Solution 4 provided in the present disclosure.

The foregoing separately describes the methods provided in the present disclosure from a perspective of interaction between a BBU and a radio frequency device. To implement the functions in the foregoing methods, the BBU and the radio frequency device may include a hardware structure and/or a software module, and implement the foregoing functions in a form of a hardware structure, a software module, or a combination of a hardware structure and a software module. Whether a specific function in the foregoing functions is performed by using the hardware structure, the software module, or the combination of the hardware structure and the software module depends on a specific application and a design constraint of the technical solution.

Based on a same concept, refer to FIG. 9. The present disclosure provides a communication apparatus 900. The communication apparatus 900 includes a processing module 901 and a communication module 902. The communication apparatus 900 may be a radio frequency device, or may be a communication apparatus that is used in a radio frequency device or used in matching with a radio frequency device and can implement a communication method performed on a radio frequency device side. Alternatively, the communication apparatus 900 may be a BBU, or may be a communication apparatus that is used in a BBU or used in matching with a BBU and can implement a communication method performed on a BBU side. Alternatively, the communication apparatus 900 may be an antenna line device (for example, a first antenna line device, a second antenna line device, or a third antenna line device), or may be a communication apparatus that is used in an antenna line device or used in matching with an antenna line device and can implement a communication method performed on an antenna line device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the radio frequency device side, the BBU side, or the antenna line device side in the foregoing method. A component that is in the communication module and that is configured to implement a receiving function may be considered as a receiving unit. A component that is in the communication module and that is configured to implement a sending function may be considered as a sending unit. In other words, the communication module includes the receiving unit and the sending unit.

When the communication apparatus 900 is used in a radio frequency device, the processing module 901 may be configured to implement a processing function of the radio frequency device in embodiments shown in FIG. 5 to FIG. 8. The communication module 902 may be configured to implement a sending and receiving function of the radio frequency device in embodiments shown in FIG. 5 to FIG. 8. Alternatively, the communication apparatus may be understood with reference to the third aspect in the summary and the possible designs in the third aspect.

When the communication apparatus 900 is used in a BBU, the processing module 901 may be configured to implement a processing function of the BBU in embodiments shown in FIG. 5 to FIG. 8. The communication module 902 may be configured to implement a sending and receiving function of the BBU in embodiments shown in FIG. 5 to FIG. 8. Alternatively, the communication apparatus may be understood with reference to the fourth aspect in the summary and the possible designs in the fourth aspect.

When the communication apparatus 900 is used in an antenna line device, the processing module 901 may be configured to implement a processing function of the related antenna line device in embodiments shown in FIG. 5 to FIG. 8. The communication module 902 may be configured to implement a sending and receiving function of the related antenna line device in embodiments shown in FIG. 5 to FIG. 8.

In addition, it should be noted that the communication module and/or the processing module may be implemented by using a virtual module. For example, the processing module may be implemented by using a software function unit or a virtual apparatus, and the communication module may be implemented by using a software function or a virtual apparatus. Alternatively, the processing module or the communication module may be implemented by using a physical apparatus. For example, if the apparatus is implemented by using a chip/chip circuit, the communication module may be an input/output circuit and/or a communication interface, and perform an input operation (corresponding to the foregoing receiving operation) and an output operation (corresponding to the foregoing sending operation). The processing module is an integrated processor, a microprocessor, or an integrated circuit.

The module division in the present disclosure is an example, and is merely logical function division. In actual implementation, there may be another division manner. In addition, functional modules in embodiments of the present disclosure may be integrated into one processor, or may exist independently. Alternatively, two or more modules may be integrated into one module. The integrated module may be implemented in a form of hardware, or may be implemented in a form of a software function module.

Based on a same technical concept, the present disclosure further provides a communication apparatus 1000. For example, the communication apparatus 1000 may be a chip or a chip system. Optionally, in the present disclosure, the chip system may include a chip, or may include a chip and another discrete component.

The communication apparatus 1000 may be configured to implement a function of any network element in the communication system shown in FIG. 1 or FIG. 2. The communication apparatus 1000 may include at least one processor 1010. The processor 1010 is coupled to a memory. Optionally, the memory may be located in the apparatus, the memory may be integrated with the processor, or the memory may be located outside the apparatus. For example, the communication apparatus 1000 may further include at least one memory 1020. The memory 1020 stores a necessary computer program, a computer program or an instruction, and/or data for implementing any one of the foregoing embodiments. The processor 1010 may execute the computer program stored in the memory 1020, to complete the method in any one of the foregoing embodiments.

The communication apparatus 1000 may further include a communication interface 1030, and the communication apparatus 1000 may exchange information with another device through the communication interface 1030. For example, the communication interface 1030 may be a transceiver, a circuit, a bus, a module, a pin, or another type of communication interface. When the communication apparatus 1000 is a chip type apparatus or circuit, the communication interface 1030 in the communication apparatus 1000 may alternatively be an input/output circuit, and may input information (or is referred to as receiving information) and output information (or is referred to as sending information). The processor is an integrated processor, a microprocessor, an integrated circuit, or a logic circuit, and the processor may determine output information based on input information.

The coupling in the present disclosure is an indirect coupling or a communication connection between apparatuses, units, or modules, and may be in an electrical, mechanical, or other form, and is used for information exchange between the apparatuses, units, or modules. The processor 1010 may cooperate with the memory 1020 and the communication interface 1030. A specific connection medium between the processor 1010, the memory 1020, and the communication interface 1030 is not limited in the present disclosure.

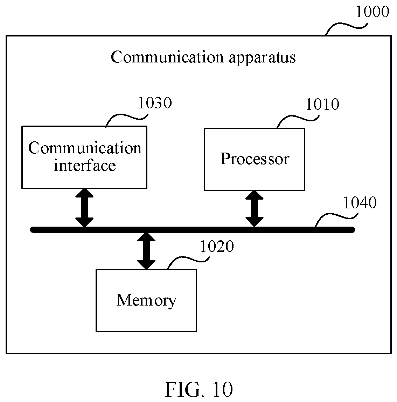

Optionally, refer to FIG. 10. The processor 1010, the memory 1020, and the communication interface 1030 are connected to each other through a bus 1040. The bus 1040 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

In the present disclosure, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the present disclosure. The general-purpose processor may be a microprocessor, any conventional processor, or the like. The steps of the methods disclosed with reference to the present disclosure may be directly performed and completed by using a hardware processor, or may be performed and completed by using a combination of hardware and software modules in the processor.

In the present disclosure, the memory may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory is any other medium that can be used to carry or store expected program code in a form of an instruction or a data structure and that can be accessed by a computer, but is not limited thereto. Alternatively, the memory in the present disclosure may be a circuit or any other apparatus that can implement a storage function, and is configured to store program instructions and/or data.

In a possible implementation, the communication apparatus 1000 may be used in a BBU. Specifically, the communication apparatus 1000 may be a BBU, or may be an apparatus that can support the BBU in implementing functions of the BBU in any one of the foregoing embodiments. The memory 1020 stores a computer program (or instructions) and/or data for implementing a function of the BBU in any one of the foregoing embodiments. The processor 1010 may execute the computer program stored in the memory 1020, to complete the method performed by the BBU in any one of the foregoing embodiments. Used in a BBU, the communication interface in the communication apparatus 1000 may be configured to interact with a radio frequency device, and send information to the radio frequency device or receive information from the radio frequency device.

In another possible implementation, the communication apparatus 1000 may be used in a radio frequency device. Specifically, the communication apparatus 1000 may be a radio frequency device, or may be an apparatus that can support the radio frequency device in implementing functions of the radio frequency device in any one of the foregoing embodiments. The memory 1020 stores a computer program (or instructions) and/or data for implementing a function of the radio frequency device in any one of the foregoing embodiments. The processor 1010 may execute the computer program stored in the memory 1020, to complete the method performed by the radio frequency device in any one of the foregoing embodiments. Used in a radio frequency device, the communication interface in the communication apparatus 1000 may be configured to interact with a BBU, and send information to the BBU or receive information from the BBU.

In another possible implementation, the communication apparatus 1000 may be used in an antenna line device. Specifically, the communication apparatus 1000 may be an antenna line device, or may be an apparatus that can support the antenna line device in implementing functions of the antenna line device in any one of the foregoing embodiments. The memory 1020 stores a computer program (or instructions) and/or data for implementing a function of the antenna line device in any one of the foregoing embodiments. The processor 1010 may execute the computer program stored in the memory 1020, to complete the method performed by the antenna line device in any one of the foregoing embodiments. Used in an antenna line device, the communication interface in the communication apparatus 1000 may be configured to interact with a radio frequency device, and send information to the radio frequency device or receive information from the radio frequency device.

The communication apparatus 1000 according to embodiments may be applied to a BBU to complete the foregoing method performed by the BBU, or may be used in a radio frequency device to complete a method performed by the radio frequency device, or may be used in an antenna line device to complete a method performed by the antenna line device. Therefore, for a technical effect that can be obtained, refer to the foregoing method example. Details are not described herein again.

Based on the foregoing embodiments, the present disclosure provides a communication system, including a BBU and a radio frequency device. The BBU and the radio frequency device can implement the communication methods according to embodiments shown in FIG. 5 to FIG. 8. Optionally, the communication system may further include an antenna line device.

All or some of the technical solutions provided in the present disclosure may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures, or functions based on the present disclosure are all or partially generated. The computer may be a general-purpose computer, a dedicated computer, a computer network, a radio frequency device, a BBU, an antenna line device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, digital video disc (digital video disc, DVD)), or a semiconductor medium, or the like.

In the present disclosure, without logical contradiction, embodiments may be mutually referenced. For example, methods and/or terms between method embodiments may be mutually referenced. For example, functions and/or terms between apparatus embodiments may be mutually referenced. For example, functions and/or terms between apparatus embodiments and method embodiments may be mutually referenced.

It is clear that a person skilled in the art can make various modifications and variations to the present disclosure without departing from the scope of the present disclosure. In this case, if the modifications and variations made to the present disclosure fall within the scope of the claims of the present disclosure and their equivalent technologies, the present disclosure is intended to include these modifications and variations.

## Claims

1. A communication method, comprising:
obtaining first information from a baseband unit BBU, wherein the first information indicates N1 antenna line devices, the antenna line device is configured to control an antenna, and N1 is a positive integer; and
maintaining a connection between a radio frequency device and a first antenna line device, wherein the first antenna line device is comprised in the N1 antenna line devices.

2. The method according to claim 1, further comprising:
sending second information to the BBU, wherein the second information indicates N2 antenna line devices currently connected to the radio frequency device, and N2 is a positive integer.

3. The method according to claim 1 or 2, wherein the N1 antenna line devices comprise at least one antenna line device in the antenna line devices currently connected to the radio frequency device.

4. The method according to any one of claims 1 to 3, further comprising:
scanning a second antenna line device based on the first information, wherein the second antenna line device is comprised in the N1 antenna line devices, and the second antenna line device is not connected to the radio frequency device; and
establishing a connection between the radio frequency device and the second antenna line device.

5. The method according to claim 2, wherein the N1 antenna line devices are comprised in the N2 antenna line devices.

6. The method according to claim 5, further comprising:
obtaining third information from the BBU, wherein the third information indicates a second antenna line device, and the second antenna line device is not connected to the radio frequency device;
scanning the second antenna line device based on the third information; and
establishing a connection between the radio frequency device and the second antenna line device.

7. The method according to any one of claims 1 to 6, further comprising:
disconnecting the radio frequency device from a third antenna line device, wherein the third antenna line device is comprised in the antenna line devices currently connected to the radio frequency device, and the third antenna line device is not comprised in the N1 antenna line devices.

8. A communication method, comprising:
determining N1 antenna line devices, wherein the antenna line device is configured to control an antenna, and N1 is a positive integer; and
sending first information, wherein the first information indicates the N1 antenna line devices, the first information indicates a radio frequency device to maintain a connection to a first antenna line device, and the first antenna line device is comprised in the N1 antenna line devices.

9. The method according to claim 8, further comprising:
obtaining second information, wherein the second information indicates N2 antenna line devices currently connected to the radio frequency device, and N2 is a positive integer.

10. The method according to claim 8 or 9, wherein the N1 antenna line devices comprise at least one antenna line device in the antenna line devices currently connected to the radio frequency device.

11. The method according to any one of claims 8 to 10, wherein the N1 antenna line devices comprise a second antenna line device, the second antenna line device is not connected to the radio frequency device, and the first information further indicates the radio frequency device to establish a connection to the second antenna line device.

12. The method according to claim 9, wherein the N1 antenna line devices are comprised in the N2 antenna line devices.

13. The method according to claim 12, further comprising:
sending third information, wherein the third information indicates a second antenna line device, and the second antenna line device is not connected to the radio frequency device.

14. The method according to any one of claims 8 to 13, further comprising:
sending fourth information, wherein the fourth information indicates the radio frequency device to disconnect from a third antenna line device, wherein a third device is comprised in the antenna line devices currently connected to the radio frequency device, and the third device is not comprised in the N1 antenna line devices.

15. A communication apparatus, configured to implement the method according to any one of claims 1 to 7.

16. A communication apparatus, configured to implement the method according to any one of claims 8 to 14.

17. A communication apparatus, comprising:
a processor, wherein the processor is coupled to a memory, and the processor is configured to perform the method according to any one of claims 1 to 7.

18. A communication apparatus, comprising:
a processor, wherein the processor is coupled to a memory, and the processor is configured to perform the method according to any one of claims 8 to 14.

19. A communication system, comprising the communication apparatus according to claim 15 or 17 and the communication apparatus according to claim 16 or 18.

20. A computer-readable storage medium, wherein the computer-readable storage medium stores instructions, and when the instructions are run on a computer, the computer is enabled to perform the method according to any one of claims 1 to 7 or the method according to any one of claims 8 to 14.

21. A computer program product, comprising instructions, wherein when the instructions are run on a computer, the computer is enabled to perform the method according to any one of claims 1 to 7 or the method according to any one of claims 8 to 14.
